# EUROPEAN PATENT APPLICATION

(11) **EP 3 255 767 A1**
(43) Date of publication of application: **13.12.2017**
(21) Application number: 16173350.6
(22) Date of filing: 07.06.2016
(51) Int. Cl.: H02M 1/12, H02M 7/537, H02M 1/44, H02M 1/00

(54) **OUTPUT FILTER FOR INVERTER LEG**

(71) Applicant: ABB Technology Oy, 00380 Helsinki (FI)
(72) Inventor: Kittilä, Jukka-Pekka, 00380 Helsinki (FI)
(74) Representative: Kolster Oy Ab

(57) **Abstract**

The present disclosure describes a two-level inverter leg comprising two power semiconductor switching devices (Q1, Q2) between a first connection point (21) and a second connection point (22), a first inductor (L1) connected between an unfiltered output (23) and a filtered output (25) of the inverter leg, a first capacitor (C1) connected between the filtered output (25) and the first connection point (21), a first rectifier device (D1) and a first resistor (R1) connected in series between the filtered output (25) and the first connection point (21), the series connection being configured to allow a flow of current from the filtered output (25) to the first connection point (21), a second capacitor (C2) connected between the filtered output (25) and the second connection point (22), a second rectifier device (D2) and a second resistor (R2) connected in series between the filtered output (25) and the second connection point (22), the series connection being configured to allow a flow of current from the second connection point (22) to the filtered output (25).

## Description

### FIELD

The present invention relates to inverters, and particularly to filtering outputs of inverter legs.

### BACKGROUND

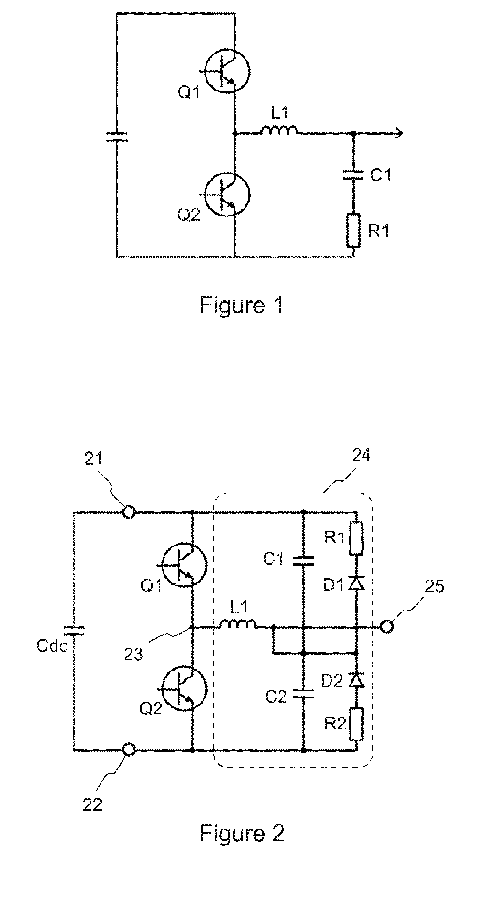

Inverters are utilized in a large variety of applications. For example, inverters are widely used for controlling electric machines. An inverter typically comprises a plurality of inverter legs. Each inverter leg may comprise power semiconductor switching devices for connecting an output of the inverter leg to a positive voltage potential or a negative voltage potential. By controlling switching states of the switching device, modulated voltages resulting in desired effective output voltages at the outputs of the inverter legs can be generated. At each switching event of the switching devices, a differential voltage with a high rate of change may be generated at the outputs. This high rate of change may be a source for undesired effects, such as high-frequency electromagnetic noise. Therefore, it may be desirable to limit the rate of change of the output voltages of the inverter legs. For example, the rate of change may be limited with a passive filtering unit comprising a choke and a capacitor forming an LC circuit. Figure 1 shows an example of an inverter leg with an output filter. The inverter leg comprises two semiconductor switches Q1 and Q2, and the output filter comprises a choke L1 and a capacitor C1. In order to dampen a resonance of the LC circuit, the filtering unit may further comprise a damping resistor in series with the capacitor. Figure 1 shows a resistor R1 in series with the capacitor C1. The damping resistor dampens the resonance by dissipating it into heat. However, this induces additional power losses to the system.

### BRIEF DESCRIPTION

An object of the present invention is thus to provide a method and an apparatus for implementing the method so as to alleviate the above disadvantage. The objects of the invention are achieved by a method and an arrangement which are characterized by what is stated in the independent claims. The preferred embodiments of the invention are disclosed in the dependent claims.

The present disclosure describes an output filter for a two-level inverter leg connected between two voltage potentials of a DC link. The output filter comprises an inductor and two capacitors that together form LC circuits at the output of the inverter leg. Two capacitors are symmetrically connected between the output of the inverter leg and both of the voltage potentials of the DC link. In addition, two series connections of a diode and a resistor are connected in parallel with the two capacitors.

When the output voltage of the inverter leg commutates from one voltage potential to another, the filter limits its rate of change. During the commutation, the inductor first stores energy. Directly after commutation, the inductor starts to release the stored energy. While the inductor is releasing the stored energy, the current flows through the diode and the resistor. The filter dissipates energy into heat only when the energy stored in the inductor is released. Therefore, additional power losses caused by the dissipation can be minimized.

Further, the filter unit according to the present disclosure has a symmetrical structure. The impedance of the filter unit remains the same when commutating from a low voltage potential to a high voltage potential and when commutating from the high voltage potential to the low voltage potential. Furthermore, a shorter and therefore lower impedance filter circuit is always available via switching device regardless of the commutation direction.

### BRIEF DESCRIPTION OF THE DRAWINGS

In the following the invention will be described in greater detail by means of preferred embodiments with reference to the accompanying drawings, in which
Figure 1 shows an example of an inverter leg with an output filter;
Figure 2 shows a filter unit and an inverter leg according to the present disclosure;
Figures 3a to 3c show exemplary, simplified diagrams of commutation of the output voltage from the high voltage potential to the low voltage potential in a filter unit according to Figure 2; and
Figures 4a to 4c show exemplary, simplified diagrams of commutation of the output voltage from the low voltage potential to the high voltage potential in a filter unit according to Figure 2.

### DETAILED DESCRIPTION

The present disclosure describes an output filter for an inverter leg of an inverter. The inverter may be a two-level inverter comprising a plurality of inverter legs, for example. An inverter leg may comprise two power semiconductor switching devices connected in series between a first connection point and a second connection point. The power semiconductor switching devices may be IGBTs (insulated-gate bipolar transistors) or power MOSFETs (metal oxide semiconductor field-effect transistors). The switching devices may also be other types of transistors, such as BJTs (bipolar junction transistors). The first and second connection point may be connected to different voltage potentials, i.e. to a high voltage potential and a low voltage potential. These two voltage potentials may be the voltages at a positive and a negative terminal of a DC link of the inverter, for example. In the context of the present application, the terms "high voltage" and "low voltage" should be interpreted only to show a relation between voltages, i.e. the high voltage being higher than the low voltage. A third connection point between the semiconductor switching devices represents an unfiltered output of the inverter leg.

In the output filter unit according to the present disclosure, a first inductor of the filter unit is connected between the third connection point and a filtered output of the inverter leg. A first capacitor of the filter unit is connected between the filtered output and the first connection point. Further, a first rectifier device and a first resistor of the filter unit are connected in series between the filtered output and the first connection point. The rectifier device may be a diode, for example. The series connection of the first rectifier and the first resistor is configured to allow a flow of current from the filtered output to the first connection point. Further, a second capacitor of the filter unit is connected between the filtered output and the second connection point. A second rectifier device and a second resistor of the filter unit are connected in series between the filtered output and the negative pole of the DC link such that the series connection is configured to allow a flow of current from the second connection point to the output.

Figure 2 shows a filter unit and an inverter leg according to the present disclosure. The inverter leg comprises an upper switching device Q1 and a lower switching device Q2 connected in series between a first connection point 21 and a second connection point 22. The first connection point 21 is connected to a positive terminal of a DC link Cdc. The second connection point 22 is connected to a negative terminal of the DC link Cdc. A third connection point 23 between the semiconductor switching devices Q1 and Q2 defines an unfiltered output of the inverter leg.

In Figure 2, a filter unit 24 is connected the unfiltered output 23 and a filtered output 25 of the inverter leg. The filter unit 24 comprises a first inductor L1 connected between the unfiltered output 23 and the filtered output 25. Further, a first capacitor C1 is connected between the filtered output 25 and the positive terminal of the DC link. A first diode D1 and a first resistor R1 are also connected in series between the filtered output 25 and the positive terminal. The diode D1 is aligned to allow a flow of current from the filtered output 25 to the positive terminal. Figure 2 also shows a second capacitor C2 of the filter unit connected between the filtered output 25 and the negative terminal of the DC link. A second diode D2 and a second resistor R2 are connected in series between the filtered output 25 and the negative terminal. The second diode D2 is aligned to allow a flow of current from the negative terminal to the filtered output 25.

In the following, operation of a filter unit according to the present disclosure is discussed in more detail. The following examples refer to a filter unit in a single inverter leg. In practice, however, the inverter leg is typically a part of an inverter comprising a plurality of such inverter legs. Only currents and voltages directly related to the operation of the filter unit are discussed. In practice, other currents (e.g. motor currents) may also flow through the inverter leg.

In a filter unit according to the present disclosure, the inductor and the capacitors of the output filter form two parallel filter circuits that limit the rate of change of the output voltage both during a falling-edge commutation (i.e. when commutating the output from the high voltage to the low voltage) and during a rising-edge commutation (i.e. when commutating the output from the low voltage to the high voltage). The parallel current loops produce low total impedance for the output filter. The total impedance is the same during both commutations. In addition, the filter dissipates energy into heat only when the inductor is releasing the energy stored to it. This further lowers the total impedance of the output filter.

The operation of the filter unit according to the present disclosure can be divided into two phases. In the first phase, the output voltage commutates from one level to another. The change of voltage potential in the unfiltered output induces currents through the inductor and the two capacitors of the output filter. The inductor limits the rate of change of these currents while storing energy to itself. As a result, the rate of the voltage at the filtered output is limited.

As the filtered output voltage reaches the unfiltered output voltage, energy is no longer stored to the inductor, and the second phase begins. The inductor starts to release its energy. This further charges the filter capacitors, and thus the output voltage reaches a level beyond the voltages at the first and second connection point. As a result, one of the series connections with a diode and a resistor becomes conductive, and the inductor starts to release its energy through the series-connected diode and resistor.

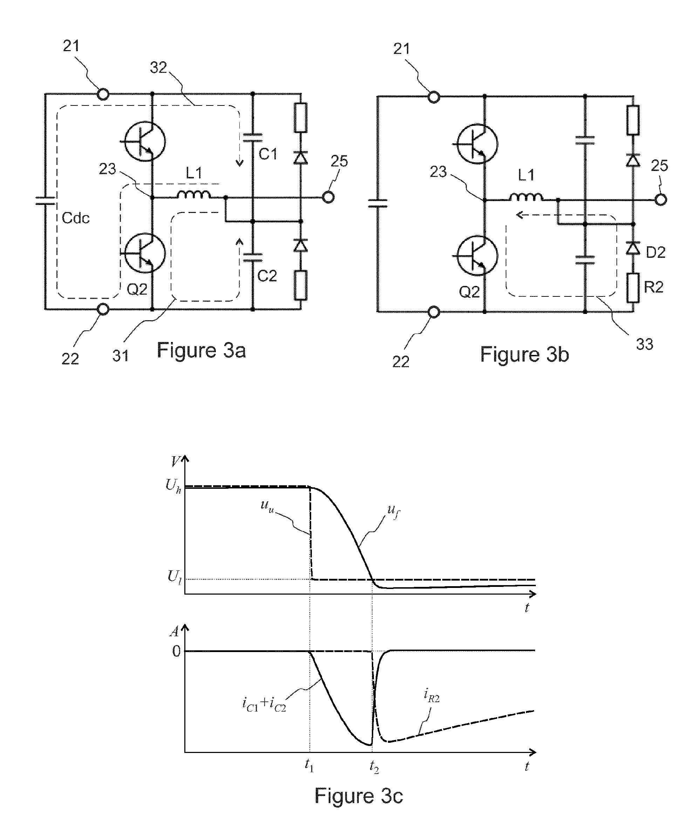

Figures 3a to 3c show exemplary, simplified diagrams of commutation of the output voltage from the high voltage potential to the low voltage potential in a filter unit according to Figure 2.

Figure 3a shows exemplary current paths during a first phase of a falling-edge commutation. A first, shorter current loop 31 forms through the inductor L1, the second switch Q2 and the second filter capacitor C2. A second, longer current loop 32 forms through the inductor L1, the second switch Q2, the DC link, and the first filter capacitor C1.

Figure 3b shows an exemplary current path during a second phase of a falling-edge commutation. A third current loop 33 is formed through the inductor L1, the second switch Q2 and the series connection of the second diode D2 and the second resistor R2.

Figure 3c shows exemplary currents and voltages in relation to Figures 3a and 3b. In Figure 3c, before the first stage, the inverter leg is initially in a first switching state where the upper switching device Q1 is in a conducting state and the lower switching device is in a non-conducting state. The upper portion of Figure 3c shows that an unfiltered output voltage *uᵤ* at the unfiltered output 23 and a filtered output voltage *u_{f}* at the filtered output 25 are close to a high voltage potential *Uₕ* of the positive terminal 21 of the DC link. Accordingly, the first capacitor has almost zero charge, whereas the second capacitor C2 has been charged to the full voltage difference between the positive terminal 21 and the negative terminal 22 of the DC link. The lower portion of Figure 3c shows a sum *i*_{*C*1} + *i*_{*C*1} of currents through the capacitors C1 and C2 and a current *i*_{*R*2} through the second resistor R2. Both currents are close to zero before commutation. The directions of currents are selected such that a current flowing from the unfiltered output 23 to filtered output 25 is shown as a positive current.

At a time instant *t*₁*,* the first phase begins. The inverter leg changes to a second switching state where the switching device Q1 is non-conducting and the lower switching device Q2 is conducting. The unfiltered output voltage *uᵤ* falls rapidly close to a low voltage potential *Uₗ* of the negative terminal 22 of the DC link. As a result, a negative filter current component starts to increase through inductor L1 as energy is stored to the inductor L1. The filter current component starts to charge the first capacitor C1 starts the first current loop 31 and discharge the second capacitor C2 through the second current loop 32. Figure 3c shows the magnitude of the sum *i*_{*C*1} + *i*_{*C*1} of currents starting to rise at the time instant *t*₁. The inductor L1 limits the rate of change of the filter current component, and thus the filtered output voltage *u_{f}* falls slower than the unfiltered output voltage *uᵤ*. In the first phase, the filter current component does not flow through resistive components. Thus, the impedance of the output filter is very low.

At a time instant *t*₂, the filtered output voltage *u_{f}* reaches the low voltage potential *Uₗ*, and the second phase begins. The voltage over the inductor L1 changes its polarity and the magnitude of the filter current component starts to decrease. While decreasing, the filter current component keeps on charging the first capacitor C1 and discharging the second capacitor C2.

As a result, the polarity of the second capacitor C2 changes, and the filtered output voltage *u_{f}* falls below the low voltage potential *Uₗ.* The series connection of the second diode D2 and the second resistor R2 becomes conductive, and the third current loop 33 is formed through the inductor L1, the second switch Q2, the second diode D2, and the second resistor R2. Figure 3c shows the current *i*_{*R*2} starting to rise rapidly after the time instant *t*₂. After a short transient, practically all of the filter current component flows through the third current loop 33. Thus, the resistor R2 dampens a resonance caused by the first inductor and the capacitors C1 and C2 by dissipating the energy stored to the first inductor L1 into heat.

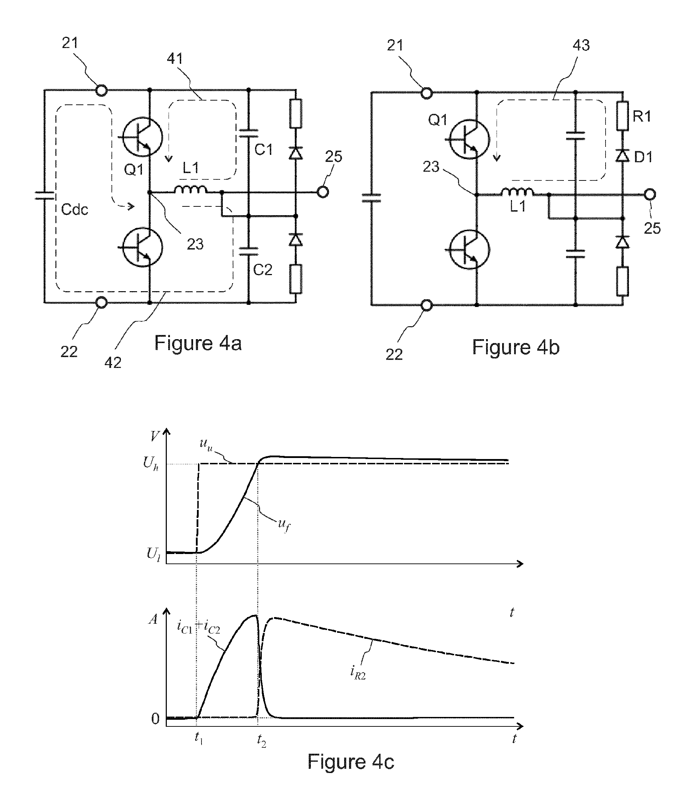

Figures 4a to 4c show exemplary, simplified diagrams of commutation of the output voltage from the low voltage potential to the high voltage potential in a filter unit according to Figure 2. References to components, currents, voltages, and switching states correspond with those of Figures 3a to 3c.

Figure 4a shows exemplary current paths forming during the first phase when commutating from the low voltage to the high voltage. A first, shorter current loop 41 forms through the inductor L1, the first switch Q1 and the first filter capacitor C1. A second, longer current loop 42 forms through the inductor L1, the first switch Q1, the DC link, and the second filter capacitor C2. Figure 4b shows exemplary current path formed during the second phase when commutating from the low voltage to the high voltage. A third current loop 43 is formed through the inductor L1, the first switch Q1 and the series connection of the first diode D1 and the first resistor R1.

Figure 4c shows exemplary currents and voltages in relation to Figures 4a and 4b. In Figure 4c, the inverter leg is initially in the second switching state. The upper portion of Figure 4c shows the unfiltered output voltage *uᵤ* and the filtered output voltage *u_{f}* being close to the low voltage potential *Uₗ.* The second capacitor C2 has almost zero charge whereas the first capacitor C1 has been charged to the voltage potential between the positive terminal 21 and the negative terminal 22 of the DC link. The lower portion of Figure 4c shows the sum *i*_{*C*1} + *i*_{*C*1} of currents through the capacitors C1 and C2 and the current *i*_{*R*2} through the second resistor R2.

At a time instant *t*₁, the first phase begins. The switching state of the inverter leg changes from the second state to the first switching state. The lower switching device Q2 becomes non-conducting and the upper switching device Q1 becomes conducting. The unfiltered output voltage *uᵤ* rises rapidly close to the high voltage potential *Uₕ.* As a result, a positive filter current component starts to flow through inductor L1 as energy is stored to the inductor L1. The filter current component starts to discharge the first capacitor C1 through the first current loop 41 and charge the second capacitor C2 through the second current loop 42. Figure 3c shows the sum *i*_{*C*1} + *i*_{*C*1} of currents starting to rise at the time instant *t*₁.

At a time instant *t*₂, the filtered output voltage *u_{f}* reaches the high voltage potential *Uₕ.* The voltage over the inductor L1 changes its polarity and the magnitude of the filter current component starts to decrease. While decreasing, the filter current component keeps on discharging the first capacitor C1 and charging the second capacitor C2. As a result, the polarity of the first capacitor C1 changes, and the filtered output voltage *u_{f}* rises above the high voltage potential *Uₕ.* The series connection of the first diode D1 and the first resistor R2 becomes conductive, and the third current loop 43 is formed through the inductor L1, the first switch Q1, the first diode D1, and the first resistor R1. Figure 4c shows the current *i*_{*R*2} starting to rise rapidly after the time instant *t*₂. After a short transient, practically all of the filter current component flows through the third current loop 33.

An output filter according to the present disclosure may be implemented in an inverter comprising a plurality of inverter legs, for example. The inverter may be a three-phase, two-level inverter, for example. Each inverter leg may comprise an output filter according to the present disclosure. The inverter may comprise a DC link having a positive terminal and a negative terminal, and the plurality of inverter legs may each be connected between the positive terminal and the negative terminal, for example. The inverter comprising an output filter according to the present disclosure may be used for various purposes. For example, the inverter may be used for controlling an electric machine. The electric machine may operate as a generator or a motor.

In an output filter according to the present disclosure, the inductor, the first capacitor, the second capacitor, the first resistor, and the second resistor may each be component units that comprise a plurality of discrete components connected in series.

It will be obvious to a person skilled in the art that the inventive concept can be implemented in various ways. The invention and its embodiments are not limited to the examples described above but may vary within the scope of the claims.

## Claims

1. A two-level inverter leg comprising
two power semiconductor switching devices connected in series between a first connection point and a second connection point, wherein a third connection point between the switching devices define an unfiltered output of the inverter leg,
a first inductor connected between the unfiltered output and a filtered output of the inverter leg,
a first capacitor connected between the filtered output and the first connection point
a first rectifier device and a first resistor connected in series between the filtered output and the first connection point, the series connection being configured to allow a flow of current from the filtered output to the first connection point,
a second capacitor connected between the filtered output and the second connection point,
a second rectifier device and a second resistor connected in series between the filtered output and the second connection point, the series connection being configured to allow a flow of current from the second connection point to the filtered output.

2. An inverter comprising
a DC link having a positive terminal and a negative terminal, and
a plurality of inverter legs according to claim 1, each inverter leg being connected between the positive terminal and the negative terminal.
